# EUROPÄISCHE PATENTSCHRIFT

(11) **EP 4 451 506 B1**
(45) Veröffentlichungstag und Bekanntmachung des Hinweises auf die Patenterteilung: **09.09.2026**
(21) Anmeldenummer: 24164219.8
(22) Anmeldetag: 18.03.2024
(51) Int. Cl.: H02J 7/00

(54) **LADE-/LAGERSCHRANK ZUM AUFLADEN/LAGERN EINES ELEKTRISCHEN AKKUS**
CHARGING/STORING CABINET FOR CHARGING/STORING AN ELECTRIC BATTERY
ARMOIRE DE CHARGEMENT/STOCKAGE POUR CHARGER/STOCKAGE UN ACCUMULATEUR ÉLECTRIQUE

(30) Priorität: 18.04.2023 DE 202023101981 U
(43) Veröffentlichungstag der Anmeldung: 23.10.2024
(73) Patentinhaber: Cemo GmbH, 71384 Weinstadt (DE)
(72) Erfinder: SCHMID, Bernhard, 71384 Weinstadt (DE); SIGLE, Jonas, 71334 Waiblingen (DE)
(74) Vertreter: BRP Renaud & Partner mbB Rechtsanwälte Patentanwälte Steuerberater

(56) Entgegenhaltungen:
- DE-U1- 202020 102 783

## Beschreibung

Die vorliegende Erfindung betrifft einen Lade-/Lagerschrank zum Aufladen/Lagern zumindest eines elektrischen Akkus mit einem Gehäuse mit zumindest einer schwenkbaren Tür, die über ein Schließsystem verschließbar ist, gemäß dem Oberbegriff des Anspruchs 1.

Aus der DE 20 2020 102 783 A1 ist ein gattungsgemäßer Lade-/Lagerschrank zum Aufladen/Lagern zumindest eines elektrischen Akkus mit einem Gehäuse mit zumindest einer schwenkbaren Tür bekannt, die über ein Schließsystem verschließbar ist. Das Schließsystem weist dabei zwei über einen Drehgriff zum Öffnen und Schließen verstellbare Schließstangen auf, die bei geschlossenem Schließsystem in eine jeweils zugeordnete gehäuseseitige Ausnehmung eingreifen. Jede Schließstange ist mittels einer Federeinrichtung in Richtung der Tür vorgespannt, wobei das Schließsystem derart ausgebildet ist, dass ein teilweises Öffnen der Tür ab einem vordefinierten Überdruck im Innenraum des Lade-/Lagerschranks durch ein Verstellen der Schließstange entgegen der Federeinrichtung erfolgt.

Ladeschränke zum Aufladen/Lagern von Akkus, beispielsweise Lithium-Ionen-Akkus, sind hinlänglich bekannt. Derartige Ladeschränke ermöglichen beispielsweise ein gleichzeitiges und überwachtes Laden mehrerer, insbesondere auch unterschiedlicher, Akkus. Die Ladeschränke können dabei zusätzlich einen Lüfter enthalten, ebenso wie einen Temperatursensor, der eine Temperatur in einem Innenraum eines Gehäuses des Lade-/Lagerschranks überwacht und diesen gegebenenfalls stromlos schaltet bzw. ein Warnsignal erzeugt, sofern eine vorgegebene Temperatur überschritten wird.

Zudem müssen derartige Ladeschränke auch gewisse Brandschutzprüfungen erfüllen, weshalb diese beispielsweise entsprechend der DIN EN 1363-1 geprüft werden. Hierzu wird der jeweils zu prüfende Lade-/Lagerschrank in eine entsprechende Brandversuchskammer gestellt und der erforderliche Brandversuch durchgeführt, um anschließend die entsprechende Zertifizierung zu erhalten.

Des Weiteren sollten derartige Ladeschränke Explosionen von schadhaften Akkus im Innenraum nach Möglichkeit schadlos überstehen, da derartige Explosionen bzw. solche schadhafte Akkus nicht gänzlich auszuschließen sind.

Die vorliegende Erfindung beschäftigt sich daher mit dem Problem, für einen Lade-/Lagerschrank der gattungsgemäßen Art eine verbesserte oder zumindest eine alternative Ausführungsform anzugeben, die insbesondere robuster ist und insbesondere auch eine vereinfachte Zertifizierung ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Lade-/Lagerschrank zum Aufladen/Lagern zumindest eines elektrischen Akkus, beispielsweise eines Lithium-Ionen-Akkus, mit einem Gehäuse mit zumindest einer schwenkbaren Tür auszustatten, die über ein Schließsystem verschließbar ist. Das Gehäuse bzw. die Tür sind dabei aus nicht brennbaren, feuerwiderstandsfähigen Komponenten, beispielsweise aus Brandschutzplatten oder Faserverbundplatten, ausgebildet, wobei im Bereich zwischen dem Gehäuse und der Tür zusätzlich spezielle Brandschutzdichtungen vorgesehen sein können, die einen unerwünschten Flammenaustritt verhindern, indem diese sich ab einer vorbestimmten Temperatur ausdehnen und durch eine Volumenvergrößerung jeglichen Spalt abdichten. Üblicherweise besitzt der erfindungsgemäße Lade-/Lagerschrank zwei schwenkbare Türen, die an gegenüberliegenden Seitenwänden angeschlagen sind. Das Schließsystem der schwenkbaren Tür des Gehäuses des Lade-/Lagerschranks ist dabei drucksensibel ausgebildet und ermöglicht ab einem vordefinierten Überdruck in einem Innenraum des Lade-/Lagerschranks, welcher beispielsweise durch eine Explosion eines schadhaften Akkus ausgelöst wird, ein teilweises Öffnen der Tür, beispielsweise ein Öffnen um wenige Grad, wodurch ein Spalt freigegeben wird und ein sofortiger Druckabbau im Innenraum des Lade-/Lagerschranks möglich ist, ohne dass die Tür durch den auftretenden Explosionsdruck vollständig öffnet und dadurch eine Umgebung des Lade-/Lagerschranks gefährdet bzw. beschädigt wird. In dem Lade-/Lagerschrank selbst kann selbstverständlich eine elektrische Anschlussstelle zum elektrischen Kontaktieren des zumindest einen Akkus mit einer Stromquelle vorgesehen sein. In diesem Fall handelt es sich um einen Ladeschrank. Das Schließsystem weist zwei über einen Drehgriff zum Öffnen und Schließen verstellbare Schließstangen auf, die bei geschlossenem Schließsystem in eine jeweils zugeordnete, gehäuseseitige Ausnehmung eingreifen. Hierdurch lässt sich ein zuverlässiges und mechanisch einfach arbeitendes Schließsystem schaffen, welches eine leichte Betätigung und zugleich einen sicheren Verschluss der Türen des Lade-/Lagerschranks ermöglicht. Jede Schließstange ist mittels einer Federeinrichtung in Richtung der Tür vorgespannt, wobei das Schließsystem derart ausgebildet ist, dass ein teilweises Öffnen der Tür ab einem vordefinierten Überdruck im Innenraum des Lade-/Lagerschranks durch ein Verstellen der Schließstange entgegen der Federeinrichtung erfolgt. Eine derartige Federeinrichtung bietet den großen Vorteil, dass die jeweils zugehörige Tür im Explosionsfall, bei welchem ein vordefinierter Überdruck erreicht bzw. überschritten wird, einen Spalt weit öffnet und damit der Überdruck abgebaut werden kann und anschließend die Federeinrichtung wieder für ein Schließen der Tür sorgt, wodurch insbesondere ein vollständiges Offenstehen der Türen vermieden werden kann. Hierdurch ist es insbesondere auch möglich, eine sich während der Explosion bildende Rauchwolke zumindest größtenteils im Inneren des Lade-/Lagerschranks gefangen zu halten. Alles in allem kann mit dem erfindungsgemäßen Lade-/Lagerschrank eine Gefährdung einer Umgebung, insbesondere von in der näheren Umgebung des Lade-/Lagerschranks stehenden Mitarbeitern durch schadhafte und explodierende Akkus im Innenraum des Lade-/Lagerschranks reduziert werden.

Erfindungsgemäß sind die Schließstangen jeweils in einem U-förmigen Führungsbügel geführt, der über zwei Durchgangsöffnungen an zwei Führungsstangen geführt ist, wobei die beiden Führungsstangen an der zugehörigen Tür fixiert sind. Ein derartiger U-förmiger Führungsbügel kann als Metallbügel ausgebildet sein und dadurch die bei einer Explosion schlagartig auftretenden Kräfte problemlos aufnehmen. Über die beiden Durchgangsöffnungen kann der U-förmige Führungsbügel an den beiden Führungsstangen geführt werden, wodurch eine Zwangsführung des Führungsbügels und dadurch auch der Schließstangen im Explosionsfall bewirkt wird. Die beiden Führungsstangen können beispielsweise als die jeweilige Tür durchdringende Schrauben ausgebildet sein und von außen nach innen durch die Tür geführt werden. An ihren nach außen weisenden Längsenden können Sie einen Flachrundschraubkopf aufweisen, der eine entsprechende Krafteinleitung in die Tür bzw. ein Türblech ermöglicht.

Erfindungsgemäß sind die beiden Führungsstangen an ihren jeweils freien Enden über einen Bügel miteinander verbunden. Die beiden Führungsstangen können, wie beispielsweise im vorherigen Absatz bereits beschrieben, als Schrauben ausgebildet sein und an ihrem in den Innenraum des Lade-/Lagerschranks ragenden Ende ein Gewinde aufweisen, an welchem beispielsweise zwei Muttern sowie ein dazwischen angeordneter Bügel fixiert werden können. Der Bügel, der beispielsweise als Verbindungsblech ausgebildet sein kann, besitzt dabei zwei Durchgangsöffnungen, die vorzugsweise komplementär zum Durchmesser der Führungsstangen bzw. Schrauben ausgebildet ist, sodass der Bügel über beide Führungsstangen übergestülpt und mittels der an jeder Führungsstange vorhandenen Muttern fixiert werden kann. Der Bügel bildet dabei einen Anschlag, an welchem im Explosionsfall der U-förmige Führungsbügel anschlägt und dadurch ein weiteres Öffnen der Türen verhindert bzw. begrenzt.

Erfindungsgemäß ist an jeder Führungsstange zwischen dem U-förmigen Führungsbügel und dem Bügel eine Feder der Federeinrichtung angeordnet. Diese kann beispielsweise als Schraubenfedern ausgebildet sein, welche über die jeweilige Führungsstange geschoben ist. Über die beiden Federn kann im Explosionsfall eine Öffnungsbewegung der Türen abgebremst werden, sodass ein Teil der Explosionsenergie in Federenergie umgewandelt und dadurch die Belastung für das Schließsystem reduziert werden kann. Über die Federn der Federeinrichtung erfolgt nach dem Druckabbau auch wieder ein selbsttätiges Zuziehen der Türen, wodurch ein unkontrollierter Austritt von Explosionsgasen und damit ein Gesundheitsrisiko zumindest reduziert werden können. Durch die Federn der Federeinrichtung ist es auch möglich, dass die Türen bei mehreren aufeinanderfolgenden Explosionen mehrmals kurzzeitig öffnen, sodass keinerlei zusätzliche Druckentlastungsbauteile, wie beispielsweise Rückschlagventile, erforderlich sind.

Bei einer weiteren vorteilhaften Ausführungsform des erfindungsgemäßen Lade-/Lagerschranks weist zumindest eine Schließstange eine runde oder eckige Außenkontur und der zugehörige U-förmige Führungsbügel eine komplementär dazu ausgebildete Innenkontur auf. Hierdurch kann eine besonders exakte, da formschlüssige Führung der jeweiligen Schließstange im zugehörigen Führungsbügel erreicht werden. Dabei ist insbesondere auch eine spielfreie Führung der Schließstangen in dem jeweils zugehörigen Führungsbügel denkbar.

Bei einer weiteren bevorzugten Ausführungsform des erfindungsgemäßen Lade-/Lagerschranks ist zumindest ein Zwischenboden im Innenraum des Lade-/Lagerschranks angeordnet, der über ein Dichtelement gegenüber der Tür abgedichtet ist. Über einen derartigen Zwischenboden kann eine Unterteilung des Innenraums des Lade-/Lagerschranks in kleinere Raumeinheiten erreicht werden, wodurch ein Volumen von möglicherweise auftretenden, explosionsfähigen Atmosphären, bewusst reduziert werden kann. Hierdurch lassen sich die Auswirkungen einer Explosion auf ein beherrschbares Maß begrenzen.

Zweckmäßig ist das Dichtelement als Bürstenleiste oder als Gummidichtung mit Aussparung ausgebildet. Besonders die Verwendung einer Bürstenleiste ermöglicht einerseits eine zuverlässige Abdichtung zweier kleinerer Raumeinheiten innerhalb des Innenraums des Lade-/Lagerschranks, wobei das als Bürstenleiste ausgebildete Dichtelement zudem den Vorteil bietet, dass keine exakte Anpassung an das Schließsystem, insbesondere die Schließstangen, erforderlich ist. Werden die Schließstangen beispielsweise über einen Drehgriff betätigt, so erfolgt beim Öffnen und Schließen des Schließsystems nicht nur ein axiales Verstellen der Schließstangen, sondern zusätzlich auch ein Verschwenken derselben, sodass ein als Bürstenleiste ausgebildetes Dichtelement hier besonders vorteilhaft ist, insbesondere im Vergleich zu einem als Gummidichtung ausgebildeten Dichtelement, bei welchem die zu erwartenden Bewegungen der Schließstangen durch entsprechende Aussparungen in der Gummidichtung vorab berücksichtigt werden müssten. Demzufolge müssten die Aussparungen entsprechend groß sein, was wiederum eine zuverlässige Abdichtung über das Dichtelement behindert.

Bei einer weiteren vorteilhaften Ausführungsform der erfindungsgemäßen Lösung sind die Schließstangen derartig gelenkig an dem Drehgriff angebunden, dass diese ab einem vordefinierten Überdruck im Innenraum des Lade-/Lagerschranks um einen Winkel α zwischen 1 und 3°, vorzugsweise um eine Winkel α = 2°, verdrehbar sind und ein teilweises Öffnen der Tür ermöglichen. Der Winkel α bemisst sich dabei zwischen der Ebene der Türoberfläche und der Achse der Schließstange. Auch durch eine derartige Ausführungsform ist es möglich, einen Druckabbau bei einem explodierenden Akku schnell herbeizuführen, ohne dass dabei die Tür ganz geöffnet wird und beispielsweise Explosionsgase nach außen dringen können. Eine Achse der gelenkigen Anbindung der Schließstangen an den Drehgriff verläuft dabei parallel zur Ebene der Tür.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Ansicht von vorne auf einen erfindungsgemäßen Lade-/Lagerschrank,
- Fig. 2: eine Schnittdarstellung entlang der Schnittebene B-B durch den erfindungsgemäßen Lade-/Lagerschrank im normalen Ladezustand,
- Fig. 3: eine Detaildarstellung einer weiteren möglichen Ausführungsform des Schließsystems in geschlossenem Zustand,
- Fig. 4: eine Darstellung wie in Fig. 3, jedoch bei einem vordefinierten Überdruck im Innenraum und druckbedingt geöffneter Tür,
- Fig. 5: eine Schnittdarstellung entlang der Schnittebene V-V aus Fig. 3,
- Fig. 6: eine Schnittdarstellung entlang der Schnittebene VI-VI aus Fig. 4,
- Fig. 7: eine Schnittdarstellung durch den erfindungsgemäßen Lade-/Lagerschrank mit Zwischenboden,
- Fig. 8: eine Schnittdarstellung im Bereich einer Türanbindung mit einem Winkel.

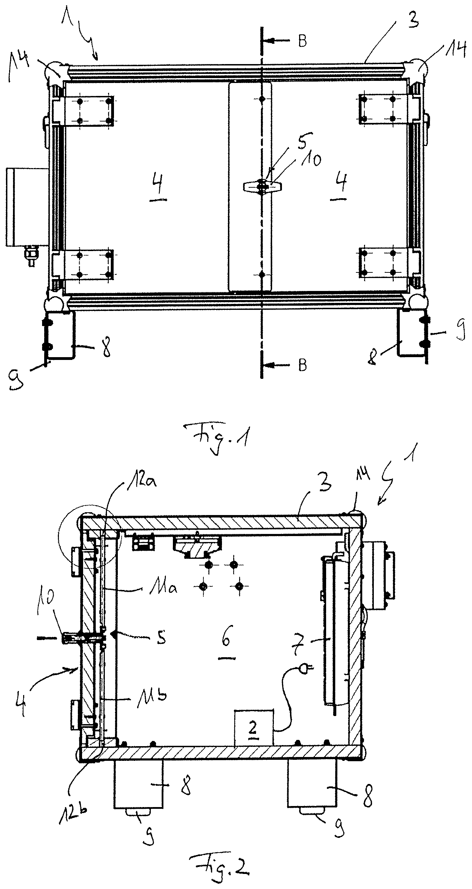

Entsprechend den Fig. 1 bis 8 weist ein erfindungsgemäßer Lade-/Lagerschrank 1 zum Aufladen/Lagern zumindest eines elektrischen Akkus 2 (vgl. Fig. 2), beispielsweise eines Lithium-Ionen-Akkus, ein Gehäuse 3 mit zumindest einer, hier mit zwei schwenkbaren Türen 4 auf, die über ein Schließsystem 5 verschließbar sind. In einem Innenraum 6 des Gehäuses 3 kann zumindest eine elektrische Anschlussstelle 7 zum elektrischen Kontaktieren des Akkus 2 mit einer Stromquelle vorgesehen sein.

Das Schließsystem 5 besitzt vorzugsweise zwei über einen Drehgriff 10 zum Öffnen und Schließen verstellbare Schließstangen 11a, 11b, welche bei geschlossenem Schließsystem 5 in eine jeweils zugeordnete gehäuseseitige Ausnehmung 12a, 12b (vgl. Fig. 2 bis 4) eingreifen.

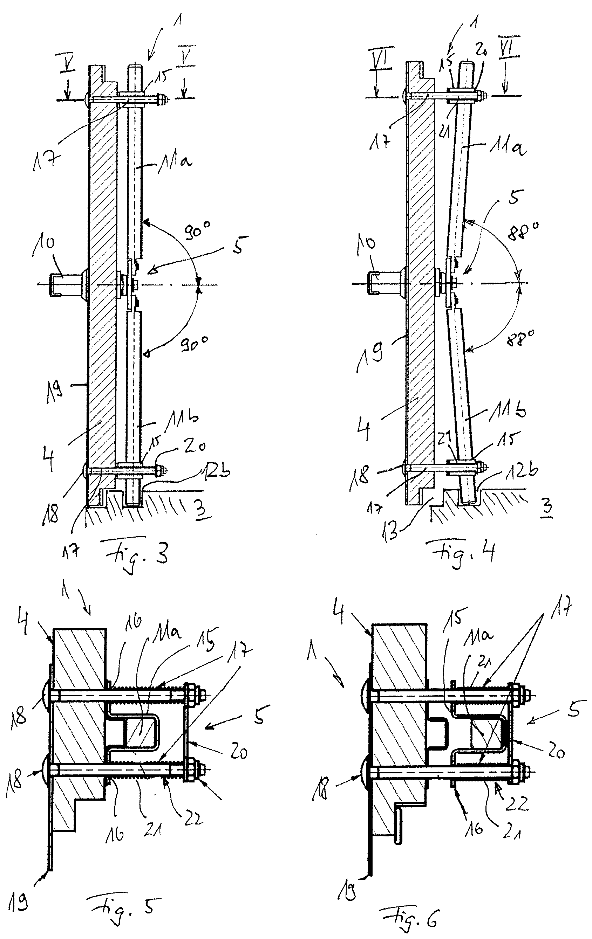

Das Schließsystem 5 ist dabei drucksensibel und ermöglicht ab einem vordefinierten Überdruck im Innenraum 6 des Lade-/Lagerschranks 1 ein teilweises Öffnen der Tür 4. Dieses teilweise Öffnen der Tür 4 bewirkt, dass zwischen der Tür 4 und dem Gehäuse 3 ein Spalt 13 (vgl. insbesondere die Fig. 4) entsteht, durch welchen ein Überdruck, beispielsweise hervorgerufen durch eine Explosion eines zu ladenden Akkus 2, entweichen kann, ohne dass die Tür 4 komplett aufgeht und eine Gefährdung einer Umgebung besteht. Insbesondere bei einem Brand von Akkus 2, die als Lithium-Akkus ausgebildet sind, kann es mehrere aufeinanderfolgende Explosionen geben, weshalb das Schließsystem 5 ein mehrmaliges Öffnen/Nachgeben ermöglicht.

Betrachtet man nun das Schließsystem 5 gemäß den Fig. 2 bis 6, so kann man erkennen, dass bei diesem die Schließstangen 11a, 11b derart gelenkig an dem Drehgriff 10 bzw. einem Zapfen desselben angebunden sind, dass sie im Normalzustand (vgl. Fig. 2, 3 und 5) parallel zu einer Oberfläche der jeweiligen Tür 4 verlaufen und ab einem vordefinierten Überdruck (vgl. Fig. 4 und 6), beispielsweise ausgelöst durch eine Explosion im Innenraum 6 des Lade-/Lagerschranks 1, um einen Winkel α zwischen 1 und 3°, vorzugsweise um eine Winkel α von 2°, verdreht sind und dadurch ein teilweises Öffnen der Tür 4 ermöglichen.

Die einzelnen Schließstangen 11a, 11b können beispielsweise einen Durchmesser zwischen 7 und 8 mm aufweisen. Durch das Verdrehen des Drehgriffs und damit der Schließstangen 11a, 11b um eine gemäß den Fig. 3 bis 5 in der Bildoberfläche verlaufende Achse kann ein leichtes Öffnen der Tür 4 erreicht werden, ohne dass die Schließstangen 11a, 11b vollständig aus deren gehäuseseitigen Ausnehmungen 12a, 12b herausgezogen werden und dadurch die Türen 4 vollständig geöffnet werden könnten.

Jede Schließstange 11a, 11b ist mittels einer Federeinrichtung 22 in Richtung der Tür 4 vorgespannt ist, wobei das Schließsystem 5 derart ausgebildet ist, dass ein teilweises Öffnen der Tür 4 ab einem vordefinierten Überdruck im Innenraum 6 des Lade-/Lagerschranks 1 durch ein Verstellen der Schließstange 11a, 11b entgegen der Federeinrichtung 22 erfolgt. Hierdurch kann im Explosionsfall eine Öffnungsbewegung der Türen 4 abgebremst und ein Teil der Explosionsenergie in Federenergie umgewandelt und dadurch die Belastung für das Schließsystem 5 reduziert werden. Dabei ist an jeder Führungsstange 17 zwischen dem U-förmigen Führungsbügel 15 und dem Bügel 20 eine Feder 21 der Federeinrichtung 22 angeordnet, die beispielsweise als Schraubenfedern ausgebildet sein können. Über die beiden Federn 21 der Federeinrichtung 22 erfolgt nach dem Druckabbau auch ein wieder Zuziehen der Türen 4, wodurch ein unkontrollierter Austritt von Explosionsgasen und damit ein Gesundheitsrisiko zumindest reduziert werden können. Durch die Federn 21 der Federeinrichtung 22 ist es auch möglich, dass die Türen 4 bei mehreren aufeinanderfolgenden Explosionen mehrmals kurzzeitig öffnen, wodurch keinerlei zusätzliche Druckentlastungsbauteile, wie beispielsweise Rückschlagventile, erforderlich sind.

Die Schließstangen 11a, 11b sind entsprechend den Fig. 2 bis 6 jeweils in einem U-förmigen Führungsbügel 15 geführt, der über zwei Durchgangsöffnungen 16 an zwei Führungsstangen 17 geführt ist, wobei die beiden Führungsstangen 17 an der zugehörigen Tür 4 fixiert sind. Ein derartiger U-förmiger Führungsbügel 15 kann als Metallbügel ausgebildet sein und dadurch die bei einer Explosion schlagartig auftretenden Kräfte problemlos aufnehmen. Über die beiden Durchgangsöffnungen 16 kann der U-förmige Führungsbügel 15 an den beiden Führungsstangen 17 geführt werden, wodurch eine Zwangsführung des Führungsbügels 15 und dadurch auch der Schließstangen 11a, 11b im Explosionsfall bewirkt wird. Die beiden Führungsstangen 17 können beispielsweise als die jeweilige Tür 4 durchdringende Schrauben ausgebildet sein und von außen nach innen durch die Tür 4 geführt werden. An ihren nach außen weisenden Längsenden können Sie einen Flachrundschraubkopf 18 aufweisen, der eine entsprechende Krafteinleitung in die Tür 4 bzw. ein Türblech 19 ermöglicht.

Die beiden Führungsstangen 17 sind entsprechend den Fig. 5 und 6 an ihren jeweils freien Enden über einen Bügel 20 miteinander verbunden. Die beiden Führungsstangen 17 können als Schrauben ausgebildet sein und an ihrem in den Innenraum 6 des Lade-/Lagerschranks 1 ragenden Ende ein Gewinde aufweisen, an welchem beispielsweise zwei Muttern sowie der dazwischen angeordnete Bügel 20 fixiert werden können. Der Bügel 20, der beispielsweise als Verbindungsblech ausgebildet sein kann, besitzt dabei zwei Durchgangsöffnungen, die vorzugsweise komplementär zum Durchmesser der Führungsstangen 17 ausgebildet ist, sodass der Bügel 20 über beide Führungsstangen 17 übergestülpt und mittels der an jeder Führungsstange 17 vorhandenen Muttern fixiert werden kann. Der Bügel 20 bildet dabei einen Anschlag, an welchem im Explosionsfall der U-förmige Führungsbügel 15 anschlägt (vgl. Fig. 4 und 6) und dadurch ein weiteres Öffnen der Türen 4 verhindert bzw. begrenzt.

Zumindest eine Schließstange 11a, 11b kann eine runde oder eckige Außenkontur und der zugehörige U-förmige Führungsbügel 15 eine komplementär dazu ausgebildete Innenkontur aufweisen, wodurch eine besonders exakte, da formschlüssige Führung der jeweiligen Schließstange 11a, 11b im zugehörigen Führungsbügel 15 erreicht werden kann.

Um darüber hinaus eine erleichterte Brandschutzprüfung sowie auch einen erleichterten Transport bzw. generell ein vereinfachtes Handling des Lade-/Lagerschranks 1 erreichen zu können, können zumindest zwei, vorzugsweise vier, Füße 8 vorgesehen sein, über die Lade-/Lagerschrank 1 einen Bodenabstand d von 9cm < d < 11cm, vorzugsweise von d = 10cm, erlangt. Die Lade-/Lagerschränke 1 werden in gestapeltem Zustand geprüft, da nur dann ein Stapeln in der Anwendung auch durch die Brandschutzprüfung abgesichert ist. Bei den Brandversuchen geht es vornehmlich um die Feuerwiderstandsfähigkeit von innen nach außen.

Die zumindest zwei, vorzugsweise vier, Füße 8 können dabei beispielsweise als metallische Rechteckprofile ausgebildet sein, insbesondere als sogenannte Strangpressprofile, und dadurch nicht nur kostengünstig, sondern auch äußerst stabil ausgebildet werden. Außen an den Füßen 4 kann eine Haltelasche 9 angeordnet sein, beispielsweise angeschraubt, angenietet, angeklebt oder angeschweißt, wodurch es möglich ist, mehrere Ladeschränke 1 übereinander zu stapeln und gleichzeitig zu verhindern, dass diese in dem übereinander gestapelten Zustand verrutschen. Die Haltelaschen 9 dienen somit als seitliche Führung zu einem darunter angeordneten Lade-/Lagerschrank 1. Denkbar ist dabei auch, dass die Haltelaschen 9 ein Verschieben nach vorne oder hinten ermöglichen. Selbstverständlich ist dabei auch denkbar, dass die zumindest zwei, vorzugsweise vier, Füße 8 ohne die seitlichen Haltelaschen 9 angeordnet werden können, so dass in diesem Fall der jeweilige Lade-/Lagerschrank 1 über die zugehörigen Füße 8 auch einfach aufgeständert werden kann. Hier können Antirutschmatten zum Einsatz kommen.

Generell können die Füße 8 mit dem Gehäuse 3 des Lade-/Lagerschranks 1 verschraubt und dadurch von diesem abnehmbar ausgebildet sein, wobei rein theoretisch selbstverständlich auch eine Verklebung oder feste Fixierung denkbar sind.

Die Ecken des Lade-/Lagerschranks 1 können darüber hinaus über entsprechende Schutzkappen 14 abgedeckt sein, wie diese gemäß den Fig. 1 und 2 dargestellt sind.

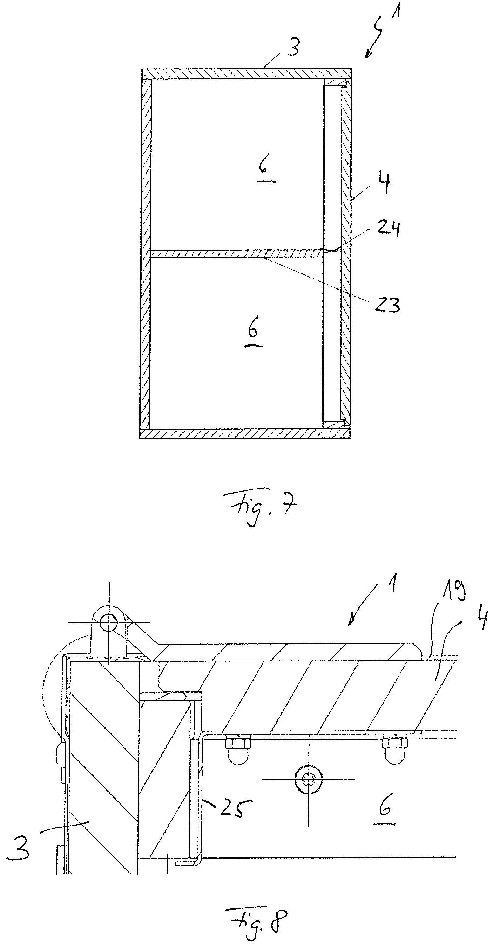

Betrachtet man die Fig. 7, so kann man erkennen, dass zumindest ein Zwischenboden 23 im Innenraum 6 des Lade-/Lagerschranks 1 angeordnet ist, der über ein Dichtelement 24 gegenüber der Tür 4 abgedichtet ist. Über einen derartigen Zwischenboden 23 kann eine Unterteilung des Innenraums 6 in kleinere Raumeinheiten erreicht werden, wodurch ein Volumen von möglicherweise auftretenden, explosionsfähigen Atmosphären, bewusst reduziert werden kann. Hierdurch lassen sich die Auswirkungen einer Explosion auf ein beherrschbares Maß begrenzen.

Das Dichtelement 24 kann als Bürstenleiste oder als Gummidichtung mit Aussparung ausgebildet. Besonders die Verwendung einer Bürstenleiste ermöglicht einerseits eine zuverlässige Abdichtung zweier kleinerer Raumeinheiten innerhalb des Innenraums 6 des Lade-/Lagerschranks 1, wobei das als Bürstenleiste ausgebildete Dichtelement 24 zudem den Vorteil bietet, dass keine exakte Anpassung an das Schließsystem 5, insbesondere die Schließstangen 11a, 11b, erforderlich ist.

Zur Erhöhung des Explosionsschutzes kann an den Türen 4 noch ein Winkel 25 (vgl. Fig. 8) angeordnet sein.

Die zwischen dem Gehäuse 3 und der Tür 4 angeordneten Dichtungen können dabei als Brandschutzdichtungen ausgebildet sein und dadurch einen Flammenaustritt verhindern. Das Schließsystem 5 ist darüber hinaus zum kaltrauchdichten Verschließen der Türen 4 am Gehäuse 3 ausgebildet.

Das Gehäuse 3 kann rein theoretisch grau lackiert sein, während die Türen 3 in orange, ähnlich RAL 2004, lackiert sein können.

## Patentansprüche

1. Lade-/Lagerschrank (1) zum Aufladen/Lagern zumindest eines elektrischen Akkus (2), mit einem Gehäuse (3) mit zumindest einer schwenkbaren Tür (4), die über ein Schließsystem (5) verschließbar ist,
- wobei das Schließsystem (5) zwei über einen Drehgriff (10) zum Öffnen und Schließen verstellbare Schließstangen (11a, 11b) aufweist, die bei geschlossenem Schließsystem (5) in eine jeweils zugeordnete gehäuseseitige Ausnehmung (12a, 12b) eingreifen,
- wobei jede Schließstange (11a, 11b) mittels einer Federeinrichtung in Richtung der Tür (4) vorgespannt ist, wobei das Schließsystem (5) derart ausgebildet ist, dass ein teilweises Öffnen der Tür (4) ab einem vordefinierten Überdruck im Innenraum (6) des Lade-/Lagerschranks (1) durch ein Verstellen der Schließstange (11a, 11b) entgegen der Federeinrichtung erfolgt,
**dadurch gekennzeichnet,**
- **dass** die Schließstangen (11a, 11b) jeweils in einem U-förmigen Führungsbügel (15) geführt sind, der über zwei Durchgangsöffnungen an zwei Führungsstangen (17) geführt ist, wobei die beiden Führungsstangen (17) an der zugehörigen Tür (4) fixiert sind,
- **dass** die beiden Führungsstangen (17) an ihrem jeweils freien Ende über einen Bügel (20) miteinander verbunden sind,
- **dass** an jeder Führungsstange (17) zwischen dem U-förmigen Führungsbügel (15) und dem Bügel (20) eine Feder (21) der Federeinrichtung (22) angeordnet ist.

2. Lade-/Lagerschrank nach Anspruch 1,
**dadurch gekennzeichnet,**
**dass** die Feder (21) als Schraubenfeder ausgebildet ist, in der die jeweils zugehörige Führungsstange (17) verläuft.

3. Lade-/Lagerschrank nach einem der vorhergehenden Ansprüche,
**dadurch gekennzeichnet,**
**dass** zumindest eine Schließstange (11a, 11b) eine runde oder eckige Außenkontur und der zugehörige Führungsbügel (15) eine komplementär dazu ausgebildete Innenkontur aufweist.

4. Lade-/Lagerschrank nach einem der vorherigen Ansprüche,
**dadurch gekennzeichnet,**
**dass** zumindest ein Zwischenboden (23) im Innenraum (6) des Lade-/Lagerschranks (1) angeordnet ist, der über ein Dichtelement (24) gegenüber der Tür (4) abgedichtet ist.

5. Lade-/Lagerschrank nach Anspruch 4,
**dadurch gekennzeichnet,**
**dass** das Dichtelement (24) als Bürstenleiste oder als Gummidichtung mit Aussparungen ausgebildet ist.

6. Lade-/Lagerschrank nach einem der vorherigen Ansprüche,
**dadurch gekennzeichnet,**
**dass** die Schließstangen (11a, 11b) derart gelenkig an dem Drehgriff (10) angebunden sind, dass sie ab einem vordefinierten Überdruck um einen Winkel α von 1° < α < 3°, vorzugsweise um einen Winkel α = 2°, verdrehbar sind und ein teilweises Öffnen der Tür (4) ermöglichen.

## Claims

1. Charging/storing cabinet (1) for charging/storing at least one electric battery (2), having a housing (3) having at least one pivotable door (4) which can be closed by means of a closing system (5),
- wherein the closing system (5) has two closing rods (11a, 11b) which are adjustable by a rotary handle (10) for opening and closing and which, when the closing system (5) is closed, engage in a respectively assigned housing-side recess (12a, 12b),
- wherein each closing rod (11a, 11b) is prestressed in the direction of the door (4) by means of a spring apparatus, wherein the closing system (5) is designed such that partial opening of the door (4) takes place from a predefined excess pressure in the interior (6) of the charging/storing cabinet (1) by adjustment of the closing rod (11a, 11b) counter to the spring apparatus,
**characterized in that**
- the closing rods (11a, 11b) are each guided in a U-shaped guide bracket (15) which is guided on two guide rods (17) via two through-openings, wherein the two guide rods (17) are fixed to the associated door (4),
- the two guide rods (17) are connected to one another at their respective free end by a bracket (20),
- a spring (21) of the spring apparatus (22) is arranged on each guide rod (17) between the U-shaped guide bracket (15) and the bracket (20).

2. Charging/storing cabinet according to claim 1,
**characterized in that**
the spring (21) is designed as a helical spring in which the respectively associated guide rod (17) extends.

3. Charging/storing cabinet according to any one of the preceding claims, **characterized in that**
at least one closing rod (11a, 11b) has a round or angular outer contour and the associated guide bracket (15) has an inner contour designed to be complementary thereto.

4. Charging/storing cabinet according to any one of the preceding claims,
**characterized in that**
at least one intermediate shelf (23) is arranged in the interior (6) of the charging/storing cabinet (1), and is sealed with respect to the door (4) by a sealing element (24).

5. Charging/storing cabinet according to claim 4,
**characterized in that**
the sealing element (24) is designed as a brush strip or as a rubber seal with recesses.

6. Charging/storing cabinet according to any one of the preceding claims,
**characterized in that**
the closing rods (11a, 11b) are connected in an articulated manner to the rotary handle (10) such that, from a predefined excess pressure, they can be rotated through an angle α of 1° < α < 3°, preferably through an angle α = 2°, and enable partial opening of the door (4).

## Revendications

1. Armoire de rangement/stockage (1) destinée au rangement/stockage d'au moins un accumulateur électrique (2), avec un boîtier (3) avec au moins une porte pivotante (4), qui peut être fermée par l'intermédiaire d'un système de fermeture (5),
- dans laquelle le système de fermeture (5) présente deux tiges de fermeture (11a, 11b) réglables par l'intermédiaire d'une poignée tournante (10) pour l'ouverture et la fermeture, qui s'engagent en cas de système de fermeture (5) fermé respectivement dans un évidement (12a, 12b) associé situé côté boîtier,
- dans laquelle chaque tige de fermeture (11a, 11b) est précontrainte en direction de la porte (4) au moyen d'un appareil à ressort, dans laquelle le système de fermeture (5) est conçu de sorte qu'une ouverture partielle de la porte (4) à partir d'une surpression prédéfinie dans l'espace intérieur (6) de l'armoire de rangement/stockage (1) par l'intermédiaire d'un déplacement de la tige de fermeture (11a, 11b) contre l'appareil à ressort,
**caractérisée en ce que**
- les tiges de fermeture (11a, 11b) sont respectivement guidées dans un étrier de guidage en forme de U (15), qui est guidé par l'intermédiaire de deux ouvertures de passage sur deux tiges de guidage (17), dans laquelle les deux tiges de guidage (17) sont fixées à la porte correspondante (4),
- les deux tiges de guidage (17) sont connectées l'une à l'autre à leur extrémité libre respective par l'intermédiaire d'un étrier (20),
- un ressort (21) de l'appareil à ressort (22) est disposé sur chaque tige de guidage (17) entre l'étrier de guidage en forme de U (15) et l'étrier (20).

2. Armoire de rangement/stockage selon la revendication 1,
**caractérisée en ce que**
le ressort (21) est conçu en tant que ressort hélicoïdal, dans lequel la tige de guidage (17) correspondante s'étend.

3. Armoire de rangement/stockage selon l'une quelconque des revendications précédentes, **caractérisée en ce que**
au moins une tige de fermeture (11a, 11b) présente un contour extérieur rond ou angulaire et l'étrier de guidage (15) correspondant présente un contour intérieur y étant complémentaire.

4. Armoire de rangement/stockage selon l'une quelconque des revendications précédentes,
**caractérisée en ce que**
au moins un fond intermédiaire (23) est disposé dans l'espace intérieur (6) de l'armoire de rangement/stockage (1), qui est étanchéifiée par rapport à la porte (4) par l'intermédiaire d'un élément d'étanchéité (24).

5. Armoire de rangement/stockage selon la revendication 4,
**caractérisée en ce que**
l'élément d'étanchéité (24) est conçu en tant que bande à brosses ou en tant que joint en caoutchouc avec des évidements.

6. Armoire de rangement/stockage selon l'une quelconque des revendications précédentes,
**caractérisée en ce que**
les tiges de fermeture (11a, 11b) sont reliées de manière articulée à la poignée tournante (10) de sorte qu'à partir d'une surpression prédéfinie, elles peuvent pivoter d'un angle a de 1° < α < 3°, de préférence d'un angle α = 2°, et permettent une ouverture partielle de la porte (4).
